Europäisches Patentamt

European Patent Office

Office européen des brevets

(11) Publication number : **0 476 996 A2**

# (12) EUROPEAN PATENT APPLICATION

(21) Application number : **91308515.5**

(22) Date of filing : **18.09.91**

(51) Int. Cl.⁵ : **G01N 30/60**

(30) Priority : **19.09.90 GB 9020450**

(43) Date of publication of application :
**25.03.92 Bulletin 92/13**

(84) Designated Contracting States :
**DE FR GB IT**

(71) Applicant : **AMICON LTD**
**Upper Mill, Stonehouse**
**Gloucestershire, GL10 2BJ (GB)**

(72) Inventor : **Lanyi, Colin Kalman**
**Court Bank Cottage, Butterow**
**Bowbridge, Stroud, Glos. (GB)**
Inventor : **Thorn Gordon**
**High Trees, 18 Westfield**
**Dursley, Glos. GL11 4EP (GB)**
Inventor : **Biddell, Christopher Richard**
**15 Guildings Way**
**Kings Stanley, Stonehouse,Glos. GL10 2LF**
**(GB)**

(74) Representative : **Williams, Trevor John et al**
**J.A. KEMP & CO. 14 South Square Gray's Inn**
**London WC1R 5LX (GB)**

(54) **Piston for chromatography column.**

(57)  A chromatography column piston has the seal
27 entirely surrounding a lower body portion
11b and arranged such that the seal has a
substantially trapezoidal cross-section offering
upper and lower frusto-conical surfaces for en-
gagement with corresponding frusto-conical
surfaces 23 and 25 of the upper and lower
piston body portions 11a and 11b, respectively,
to allow radially outward deformation of the
seal when it is axially compressed. Preferably
the maximum diameter of the lower body por-
tion 11b is slightly less than the external diame-
ter of the seal, whereby the seal overhangs the
lower body portion 11b while nevertheless al-
lowing compression of the seal to tighten
against the internal surface of the column tube
wall 3 during drawing of the lower body portion
11b upwardly against the upper body portion
11a to clamp the seal 27 therebetween.

Fig.1.

EP 0 476 996 A2

Jouve, 18, rue Saint-Denis, 75001 PARIS

The present invention relates to a piston for use in a chromatography column, in particular the piston which is slidable along the column tube and serves to pack the column with chromatography media and to hold the media in a confined bed through which material to be analysed and/or processed is passed.

Chromatography columns can be used for laboratory analysis work and for factory scale processing, in particular purification by separation using the chromatography technique, and in each case the piston needs to be sealed effectively against the wall of the column tube.

The development of chromatography columns has aimed at providing ease of operation and various additional benefits which have particular commercial importance. These include :- (a) the ability to be sterilized by autoclaving (b) improved sanitation by virtue of design features giving less carryover of product from one batch to the next, (c) the ability to resist solvents which may be used in the material to be separated, (d) conformity to food grade FDA regulations, (e) an improved pressure tolerance, and (f) lower cost.

Because of the small quantities of material being analysed in the laboratory scale columns, and of the frequently high cost of material being separated in factory scale columns, it is desirable for all of the separated material to be recoverable through the bed, and for none of it to seep upwardly around the sides of the piston.

It is a problem of known chromatography columns that the seal is separated from the porous screen on the lower face of the piston by an annular wall region which is difficult to seal with respect to the internal wall of the column tube, and as a result there is a tendency for some of the processed material to become trapped below the seal but above the level of the screen of the top end cell formed by the piston.

Accordingly, one aspect of the present invention provides a piston for a chromatography column, comprising a first body portion which will, in use in a chromatography column, be an upper body portion of the piston; a second body portion which will, in use, be a lower body portion of the piston; a seal adapted to seat between said first and second body portions, in use; and means for driving one of said first and second body portions axially towards the other, wherein said seal has an axial depth which is less at its radially inner part than at its radially outer part and is constructed to undergo radially outward deformation against the internal surface of a chromatography column tube in use of the piston.

A second aspect of the present invention provides a piston for a chromatography column, comprising a first body portion which will, in use in a chromatography column, be an upper body portion of the piston; a second body portion which will, in use, be a lower body portion of the piston; a seal adapted to seat between said first and second body portions, in use; and means for compressing the seal radially outwardly against the internal surface of a chromatography column tube in use of the piston, wherein said seal extends radially outwardly down to within 2 mm of that end face of said second body portion which, in use, will be the lower face of the piston.

A third aspect of the invention provides a seal for a chromatography column piston, comprising a first radially inner portion of a first axial extent, a second radially outer portion of a second axial extent greater than the first, and a liquid filling a chamber in each of the first and second portions with communication between the chambers in said first and second portions whereby axially compressing said first portion will result in radial expansion of said second portion of the seal.

In order that the present invention may more readily be understood the following description is given, merely by way of example, with reference to the accompanying drawings, in which:-

FIGURE 1 is a longitudinal sectional view of a chromatography column incorporating the piston and upper end cell construction in accordance with the present invention;

FIGURE 2 is a detail of the piston, therefore better illustrating the configuration in accordance with the present invention;

FIGURE 3 is a detail of Figure 2, showing the configuration at the corner of the piston where the lower body portion 11b clampingly abuts the seal 27; and

FIGURE 4 is a detail similar to Figure 3 showing an alternative embodiment of seal which allows radially outward displacement upon axial compression thereof;

FIGURE 5 is a view corresponding to Figure 2, but showing an alternative embodiment of piston; and

FIGURE 6 is a top plan view of the spring clip shown in Figure 5, and with the outlines of the piston rod and piston seal actuating shaft shown in broken lines.

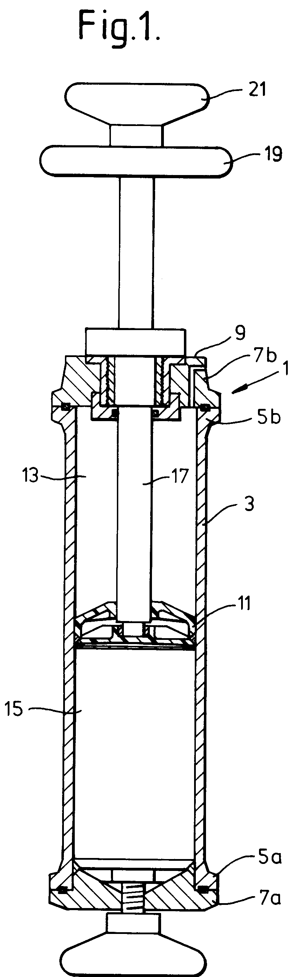

Figure 1 shows a chromatography column 1, in this case intended for laboratory analysis, as comprising a column tube 3 having at its lower end a flange 5a to which a bottom end cap 7a can be secured by means of an external clamp, not shown, and an upper flange 5b to which a similar upper end cap 7b may be secured, again by means of an external clamp.

The upper cap 7b includes an inlet 9 through which compressed gas can be pumped for pressurising the chromatography bed.

The drawing shows O-ring seals between the flanges 5a and 5b in the respective end caps 7a and 7b, in order to maintain the column tight against the escape of liquid and/or gas which may result when the interior of the column is subjected to a pressure to force the liquid being processed through the column.

A piston 11 divides the column tube into an upper chamber 13 which may be pressurised with compressed gas to maintain the piston in contact with the chromatography bed, and a lower chamber 15 which will in use be filled with chromatography media which absorb certain constituents of the material being separated, in order to allow part of the process material to pass through the column for collection, and the remainder of the material to be retained in the media and removed therefrom by subsequent processing, for example purging of the column bed.

The piston 11 is mounted on a hollow piston rod 17 which can be raised and lowered either by threading by means of a control wheel 19, for example for fine adjustment of the position of the piston 11, or by release of a friction clamp to allow rapid traversing of the piston rod 17. The construction of the piston friction clamp is the subject of our co-pending British Patent Application No. 9020451.2 and will therefore not be described in detail herein.

Finally, a further control wheel 21 allows adjustment of the position of a hollow internal control rod within the piston rod 17 to effect axial compression and outward deformation of the seal of the piston 11 for the purposes of ensuring adequate sealing action once a desired operating level has been attained.

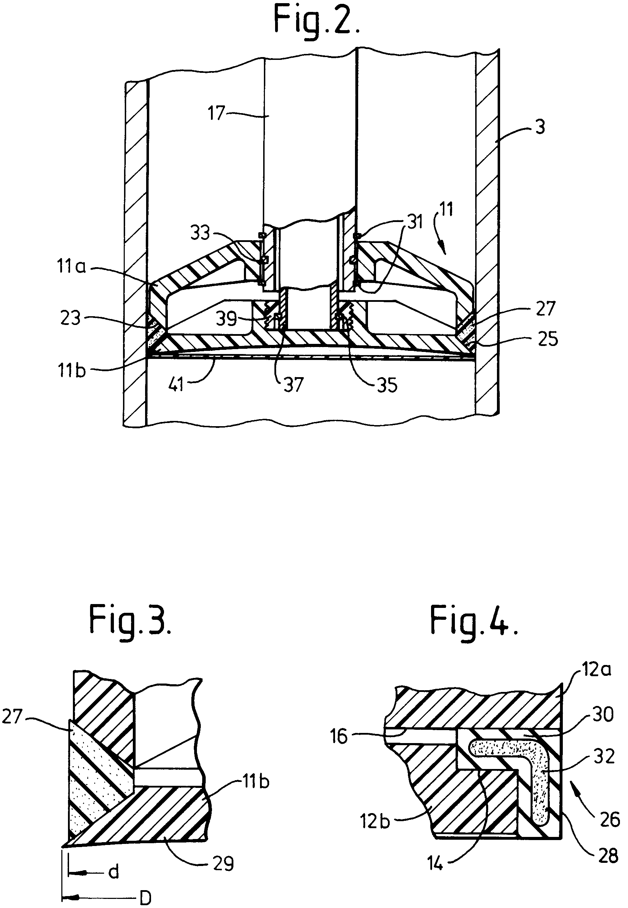

Figure 2 shows the piston 11 in the column tube 3 in greater detail and illustrates that the piston comprises an upper body portion 11a defining the piston proper, and a cooperating lower body portion 11b comprising the upper end cell of the chromatography column.

The upper body portion has a downwardly convergent edge face 23 and the lower body portion 11b has an upwardly convergent edge face 25 which together contain an elastomeric seal 27 having a cross-sectional shape in the form of a trapezium in which the two parallel faces comprise the major outer surface of the seal to seal against the interior of the column tube 3 and a minor radially inwardly facing surface, with the two remaining faces inclined to cooperate with the surfaces 23 and 25 of the upper and lower body portions 11a and 11b, respectively. The base material of the seal may, for example, be an ethylene propylene (EP) rubber, or silicone rubber, or the thermoplastic rubber including polypropylene and natural rubber and known as Santoprene available from Monsanto Polymer Products Co. Furthermore, the seal material may be loaded with polytetrafluoroethylene, or the radially outer surface may be lined with polytetrafluoroethylene in order to enable it to slide along the inner face of the column tube 3, for example during pneumatic packing, and in order to ensure the seal will release from the face of the column tube, when required to.

It is important to note that the maximum diameter of the upper end cell 11b defined by the lower body portion of the piston (depicted as D in Figure 3) is preferably greater than the diameter d of the outer surface of the seal 27, in the relaxed configuration of the seal as illustrated in Figure 3 but less than the seal maximum outer diameter under compression of the seal. Thus, when the lower body portion 11b is drawn upwardly towards the upper body portion 11a the seal 27 becomes compressed to cause its annular outer face to bulge outwardly against the radially inner face of the column tube 3. Nevertheless the seal extends right down to very nearly the lower plane of the piston.

As explained previously, the lower body portion 11b of the piston can be drawn upwardly relative to the upper body portion 11a, and for this purpose the upper body portion 11a is mounted on the piston rod 17 by means of upper and lower circular clips 31 springing into suitably positioned external grooves on the piston rod 17, and separated by an O-ring seal 33 to prevent passage of gas between the piston upper body 11a and the piston rod 17. Likewise, the lower body portion 11b is held in place by a further circular spring clip 35 below the bottom end of the piston rod 17, and engaging in an external groove on an inner hollow actuating shaft 37 which can be raised and lowered by operation of the control wheel 21 shown in Figure 1.

It is desired that the lower body portion 11b should not be caused to rotate relative to the upper body portion 11a during actuation of the hollow shaft 37 by the wheel 21 and this is provided for by the fact that the circular spring clip 35 is able to allow relative rotation between the actuating shaft 37 and the lower body portion 11b as the actuating shaft 37 is rotated by the rotation of the wheel 21. For this purpose the upper end of the actuating shaft 37 is threaded and engages in a nut portion (not shown) at the top of the piston rod 17, so that by rotating the seal-compression control wheel 21 relative to the piston-adjusting control wheel 19 allows the actuating shaft to rotate and rise or descend. Means may additionally be provided for preventing relative rotation between the hollow piston 17 and the hollow actuating shaft 37 as the above-mentioned axial movement occurs. In this case the axial motion results from engagement of internal threads of the wheel 21 directly on the external threads of the upper end of the actuating shaft 37.

During descent of the hollow actuating shaft 37, the resilience of the seal 27 will maintain the lower body portion 11b in abutting contact with the circular spring clip 35 as the latter descends away from the upper body portion 11a, whereas ascent of the hollow actuating shaft 37 will drive the lower body portion 11b upwardly by abutment with the circular spring clip 35. To this end the interior of the lower body portion 11b has an upwardly open bore considerably larger than the outer diameter of the actuating shaft 37, this bore being internally threaded to receive an externally threaded member 39 having a downwardly open bore which receives freely the circular spring clip 35.

The upper and lower body portions 11a and 11b, and the internal member 39 of the lower body portion 11b are all formed of the same material which is preferably inert to as many as possible of the materials which are likely to be used in chromatography separation techniques using the resulting column. Purely by way of example, we suggest that such material may be polypropylene, or polysulphone, or glass reinforced polyester (grp), or may be polymethyl pentene available from the Mitsui Petrochemical Company of Japan under the Trade Mark TPX.

Likewise, the liquid-permeable screen 41 of the upper end cell formed by the lower body portion 11b of the piston is formed of, for example, polypropylene or polysulphone, or polymethyl pentene, by weaving a double mesh web of polypropylene, or polysulphone or polymethyl pentene fibres and then injection moulding thereto a peripheral collar, preferably of the same material, for subsequent bonding to the interior of the radially outer portion of the recess 29 shown in Figure 3.

This bonding of the screen 41 to the lower body portion 11b is carried out by the manufacturer of the lower body portion 11b and is therefore a reliable sealing fit. Preferably the bonding process relies on vibration welding such as friction welding or ultrasonic welding.

As shown in Figures 1 and 2, the lower surface of the upper end cell defined by the piston lower body portion 11b has an upwardly convergent dishing which allows the liquid being separated, having been introduced through the piston lower body portion 11b by virtue of passing down the interior of the hollow actuating shaft 37, to be distributed with an even pressure and flow rate over the whole of the lower surface of the upper end cell 11b. For this purpose the centre of the lower body portion 11b will have at least one bore therethrough to allow the liquid to pass through, and the recess 29 may have a plurality of substantially radially extending ribs which help to define distribution passages to spread the flow of the separation liquid equally over all parts of the surface of the upper end cell 11b.

The operation of assembling the piston will now be described.

The chromatography column will have been manufactured with the screen 41 already bonded in place in the piston lower body portion 11b, as described above, and all other parts made available for dismantling and reassembling. However, in the event of a screen 41 needing to be changed, for example by contamination with one separation liquid and requiring changing before a fresh separation liquid is used, or simply after partial blocking with a separation liquid used in the past, the entire lower body portion 11b, preferably of moulded construction of an inert material such as polymethyl pentene, will be discarded and replaced by a fresh one having the seal already factory bonded in place.

First of all the upper circular spring clip 31 is inserted in its groove on the piston rod 17, after the piston rod has been suitably assembled in the upper end cap 7b of the chromatography column but before the end cap 7b is clamped against the upper flange 5b of the column tube.

The O-ring seal 33 is then rolled on to the piston rod 17 from the lower end, as far as its groove which lies between the two spaced grooves for the circular spring clips 31 and 39.

The upper body portion 11a is then pressed over the O-ring seal 33 and up against the upper circular spring clip 31 and held in order to allow the lower circular spring clip 31 to be clipped in place to hold the upper piston body portion 11a on the Piston rod.

If the hollow actuating shaft 37 is not already in place, it will now need to be inserted into the hollow piston rod 17 to emerge from the lower end of the latter sufficiently to permit the lower body portion 11b to be attached.

The attachment of the lower body portion 11b firstly requires placing of the internal component 39 on to the exterior of the actuation shaft 37, and then requires this component 39 to be held as far up the actuation shaft 37 as possible to permit the circular spring clip 35 to be placed in its groove on the exterior of the actuating shaft 37.

Now the trapezoidal section seal 27 is placed on the lower tapered edge of the upper body portion 11a and the lower body portion 11b together with its unitary screen 41 is presented to the inner component 39 for screwing on to it. To facilitate this screwing operation, the hollow actuating shaft 37 may be driven downwardly as far as possible by operation of the wheel 21, thereby exposing the upper face of the internal component 39 to allow this component 39 to be held during the screwing operation.

When screwed fully home, the inner component 39 traps the circular spring clip 35 in a limited annular space within the lower body portion 11b, and little or no axial movement of the lower body portion 11b relative to the actuating shaft 37 is possible because the lower end of the actuating shaft 37 is in this configuration substantially in abutment with a corresponding upwardly facing part of the lower body portion 11b.

Finally, the actuating shaft 37 is again raised to bring the piston lower body portion 11b into abutment with the seal 27 for holding the piston in an assembled configuration prior to insertion of the piston into the column tube 3.

When the piston rod 17 has been set in the column tube 3 at a level where the piston is in abutment with the top of the bed of chromatography separation media, the seal 27 can be actuated simply by raising the hollow inner actuating shaft 37 by means of its actuating wheel 21 to compress the seal axially and to force its radially outward compression due to the cooperating tapers of the surfaces 23 and 25 of the upper and lower body portions 11a and 11b, respectively.

This action of raising the actuating shaft 37 may, for example, be effected by means of a cam-operated mechanism interconnecting the actuating shaft and the hollow piston rod 17 whereby rotation of the actuating shaft by a quarter of a turn relative to the piston rod will cause a pin or other cam follower on the actuating shaft 37 to ride up a cam ramp on the piston rod 17 to lift the actuating shaft by the desired amount. Rotation in the reverse sense will then unload the seal.

Compression of the seal should be sufficient to ensure sealing against the interior of the column tube 3. For this purpose the above cam-operated mechanism may provide a two stage lift of the actuating shaft 37.

The alternative seal shown in Figure 4 will be used in place of the seal 27 of Figures 1 to 3 and is used in conjunction with a different form of lower surface contouring for the upper body portion and a different form of upper surface contouring for the lower body portion.

In Figure 4 the lower body portion here referenced 12b has a compression shoulder 14 which faces a flat lower surface 16 of the upper piston body portion 12a.

The seal 26 has an L-shaped cross-section with a skirt portion 28 which extends downwardly to surround the periphery of the lower body portion 12b and a radially inwardly extending compression portion 30 clamped between the shoulder 14 of the lower body portion 12b and the lower face 16 of the upper body portion 12a.

The interior of both the compression portion 30 and the skirt portion 28 has an L-shaped cross-section main chamber running round the full extent of the annular seal 26 such that in the relaxed configuration the entire chamber 32 has the shape shown. It is filled with a liquid, in this case preferably sterile water, compatible with the polymer (e.g. ethylene propylene rubber, or silicone rubber, or "Santoprene") used for the body of the seal 26 as a whole.

When the lower body portion 12b is drawn upwardly towards the upper body portion 12a, for example by a cam-operated mechanism similar to that described above with reference to Figures 1 to 3, the compression portion 30 is compressed as the shoulder 14 of the lower body portion 12b approaches the lower surface 16 of the upper body portion 12a and as a result the liquid within the compression portion 30 is expelled towards the outer skirt portion 28.

Bearing in mind that the skirt portion 28 closely conforms with the cylindrical exterior of the lower body portion 12b below the shoulder 14, this migration of liquid into the skirt portion 28 can only result in radially outward bulging of the outer cylindrical surface of the sleeve portion 28 of the seal (although some axial bulging in the downward direction at the free end of the skirt 28 may result).

As a result of this bulging, the seal more tightly engages the internal surface of the column tube and effects the required sealing therewith.

Depending on the nature of the material being separated in the chromatography column, the polymer used for the body of the seal may need to be changed, and likewise the liquid used to fill the seal may need to be changed to ensure compatibility with the new polymer chosen.

It is not essential for the medium in the chamber 32 to be a liquid, although this is preferable. Instead, any flowable substantially non-compatible medium may be used to ensure that compression of the portion 30 of the seal results in bulging of the portion 28 to tighten the sealing action.

As can be seen from Figures 3 and 4 the seal 26, like the seal 27, extends almost right down to the bottom surface of the upper end cell 12b. Preferably the lower edge of the seal is no more than 2 mm, more preferably from 1.5 mm to 1.7 mm, from the bottom plane of the piston (i.e. from the bottom of the peripheral ring of the screen 41.

The seal 27 is self-compensating in that any increase in pressure in the chromatography bed below the screen 41 will drive the upper end cell 11b upwardly to compress the seal still further and hence to tighten the sealing action of the polytetrafluoroethylene-coated outer face against the internal face of the column tube 3. This will therefore prevent any gas in the high pressure bed from passing the seal between the seal and the column tube.

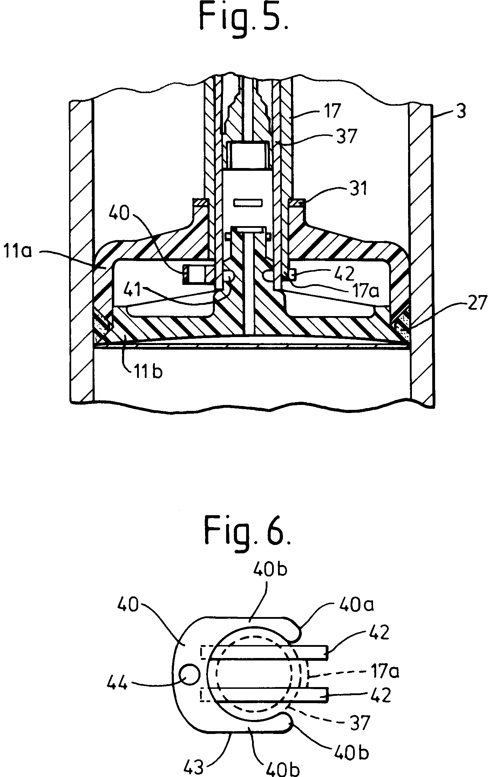

An alternative form of fixing to hold the upper and lower piston body portion is illustrated in a further embodiment shown in Figures 5 and 6. Generally every element in Figure 5 corresponds to the part having the same reference number in Figure 2, although dimensions have been changed. Figure 5 illustrates a conduit 39 inside the hollow actuating shaft 37, for conveying liquid to be analysed.

The circular clip 35 and the lower circular clip 31 have been replaced by a single spring clip 40 comprising a resilient generally U-shaped arcuate plastic clip having ends 40a which spring over the exterior of the actuating shaft 37 when the two steel pins 42 are driven into a groove 41 in an inner column portion of the lower piston body portion 11b. As shown in Figure 6, the pins 42 also pass chordally through the tubular actuating shaft 57 (in grooves spark-eroded in the shaft for this purpose).

The resilience of the clip 40 is enhanced by local thinning at 40b, which corresponds to the narrowest spacing between the circular radially inner surface of the clip and a pair of flats 43.

The plastic clip 40, made in this case of polypropylene, also has in its bight a hole 44 to facilitate extraction of the clip for dismantling the piston.

As shown in Figure 5, the right hand side of the hollow piston rod 17 has, at its bottom end, a downward extension 17a which fits snugly between the ends of the pins 42 projecting from the tubular actuating shaft 37. This permits sliding axially of the actuating shaft 37 relative to the piston rod 17 but positively prevents relative rotation.

If desired the lower end cell may be formed separately from the bottom end cap 7a of the column and joined releasably to it by means of a similar clip 40.

## Claims

1. A piston (11) for a chromatography column, comprising a first body portion (11a) which will, in use in a chromatography column, be an upper body portion of the piston; a second body portion (11b) which will, in use, be a lower body portion of the piston; and a seal (26, 27) to seal the piston relative to the radially inner surface of the column tube; characterised in that said seal is adapted to seat between said first and second body portions (11a, 11b), in use; in that means (19, 21) are provided for driving one (11b) of said first and second body portions axially towards the other; and in that said seal has an axial depth which is less at its radially inner part than at its radially outer part and is constructed to undergo radially outward deformation against said radially inner surface of a chromatography column tube in use of the piston.

2. A piston (11) for a chromatography column, comprising a first body portion (11a) which will, in use in a chromatography column, be an upper body portion of the piston; a second body portion (11b) which will, in use, be a lower body portion of the piston; and a seal (26, 27) to seal the piston relative to the radially inner surface of the column tube; characterised in that said seal is adapted to seat between said first and second body portions, in use; in that means (19, 21) are provided for compressing the seal radially outwardly against the internal surface of a chromatography column tube in use of the piston; and in that said seal extends radially outwardly down to within 2 mm of that end face of said second body portion (11b) which, in use, will be the lower face of the piston.

3. A piston according to claim 1 or 2, characterised in that said second body portion (11b) has a maximum diameter (D) which is greater than the maximum diameter (d) of said seal in the relaxed configuration of the seal, but less than the diameter assumed by the seal under compression.

4. A piston according to any one of the preceding claims, characterised in that said first and second body portions are formed of the same material, and wherein said second body portion has on its face facing away from said first body portion, in use, a liquid-permeable screen (41).

5. A piston according to any one of claims 1 to 4, characterised in that said second body portion has a tapering face (25) for engagement with the seal, whereby axial movement of said second body portion towards said first body portion will compress the seal and drive it radially outwardly into contact with the column tube surface.

6. A piston according to claim 5, characterised in that the face (23) of said first body portion (11a) which abuts the seal, in use of the piston, is tapered to effect radially outward displacement of the seal during axial compression of the seal between the first and second body portions.

7. A piston according to either of claims 5 and 6, characterised in that said first body portion is adapted to be secured on the exterior of a hollow piston rod (17) so as to be non-displaceable in an axial direction relative thereto; and in that said second body portion is secured to an actuating shaft (37) having an external diameter smaller than the internal diameter of said piston rod for drawing said second body portion towards said first body portion to effect axial compression of the seal, said actuating shaft (37) preferably being hollow to allow for pumping axially along said actuating shaft a liquid to be separated.

8. A chromatography column including the piston of any one of claims 5 to 7, characterised in that the external diameter (d) of said seal in its relaxed configuration is less than but almost equal to the internal diameter of the column tube of the chromatography column, and in the deformed configuration is larger than the outer diameter (D) of the piston so the seal contacts the column tube.

9. A chromatography column according to any one of claims 5 to 7, characterised in that said seal (27) has a trapezoidal cross-section with the parallel sides of the trapezium at the radially inner and outer zones of the seal and the other two sides mutually divergent in a radially outward direction.

10. A piston according to any one of claims 1 to 4, characterised in that said seal (26) has a first axially compressible portion (30) and a second axially extending skirt portion (28), with an incompressible flowable medium within both said axially compressible portion and said skirt portion and with communication between said axially compressible portion and said skirt portion, whereby in use said skirt portion surrounds the exterior of said lower body portion (11b) and swells radially outwardly upon compression of said axially compressible portion clamped between said first and second body portions.

11. A piston according to claim 10, characterised in that said seal is of hollow construction made of an elastomeric polymer, and said incompressible flowable medium is a liquid, preferably water, which is inert to said elastomeric polymer.

12. A seal (26) for a chromatography column piston, comprising a first radially inner portion (30) of a first axial extent, and a second radially outer portion (28) of a second axial extent greater than the first; characterised by a liquid filling a chamber in each of the first and second portions with communication between the chambers in said first and second portions whereby axially compressing said first portion will result in radial expansion of said second portion of the seal.

# Fig.1.

# Fig.2.

# Fig.3.

# Fig.4.

# Fig.5.

# Fig.6.